# EUROPÄISCHE PATENTSCHRIFT

(11) **EP 2 238 333 B1**
(45) Veröffentlichungstag und Bekanntmachung des Hinweises auf die Patenterteilung: **18.01.2012**
(21) Anmeldenummer: 08834703.4
(22) Anmeldetag: 11.11.2008
(51) Int. Cl.: F02D 41/02, F02D 41/20, F01N 3/025, F01N 3/20, F01N 9/00

(54) **VERFAHREN UND VORRICHTUNG ZUR SCHALTDRUCKBERECHNUNG BEI EINEM DOSIERVENTIL**
METHOD AND DEVICE FOR CALCULATING THE SWITCHING PRESSURE IN A METERING VALVE
PROCEDE ET DISPOSITIF DE CALCUL DE LA PRESSION DE COMMUTATION D'UNE SOUPAPE DE DOSAGE

(30) Priorität: 29.01.2008 DE 102008006568; 05.03.2008 DE 102008012630
(43) Veröffentlichungstag der Anmeldung: 13.10.2010
(73) Patentinhaber: Robert Bosch GmbH, 70442 Stuttgart (DE)
(72) Erfinder: KEUSEN, Guenter, 71686 Remseck-Pattonville (DE); DYRBUSCH, Damian, 71686 Remseck (DE); RUESING, Volker, 70197 Stuttgart (DE); STEIN, Stefan, 70195 Stuttgart (DE)
(86) Internationale Anmeldenummer: PCT/EP2008/065290
(87) Internationale Veröffentlichungsnummer: WO 2009/095105

(56) Entgegenhaltungen:
- EP-A- 1 130 227
- EP-A- 1 582 725
- WO-A-03/074338
- DE-A1- 10 149 982
- DE-A1-102004 031 321
- DE-A1-102004 063 079
- DE-A1-102006 009 921
- DE-A1-102006 057 425
- DE-A1-102006 059 625

## Beschreibung

### Stand der Technik

Die Erfindung betrifft ein Verfahren zur Schaltdruckberechnung bei einem Dosierventil einer Kraftstoff-Dosiereinrichtung zur Zudosierung von Kraftstoff in einen Abgasstrang einer Brennkraftmaschine mit einem zur Regeneration, zur Temperaturbeaufschlagung und/ oder zum Thermomanagement eines einem Abgassystem zugeordneten Bauteils der Brennkraftmaschine, wobei der Kraftstoff in Strömungsrichtung des Abgases vor dieses Bauteil injiziert wird. Die Erfindung betrifft weiterhin eine entsprechende Vorrichtung zur Durchführung des Verfahrens.

Aufgrund derzeit geplanter gesetzlicher Vorschriften muss der Partikelausstoß einer Brennkraftmaschine, insbesondere eines Dieselmotors, vor und / oder nach einem Partikelfilter, wie beispielsweise einem Diesel-Partikelfilter (DPF), während des Fahrbetriebs überwacht werden. Weiterhin ist eine Beladungsprognose des Diesel-Partikelfilters zur Regenerationskontrolle erforderlich, um eine hohe Systemsicherheit zu erreichen und kostengünstige Filtermaterialien einsetzen zu können. Weiterhin kann eine Regelung der Verbrennungseigenschaften der Brennkraftmaschine auf Basis der Information über den Partikelausstoß vorgesehen sein.

Partikelfilter weisen allerdings eine begrenzte Speicherfähigkeit für Rußpartikel auf und müssen zur Wiederherstellung der Reinigungswirkung in bestimmten Abständen regeneriert werden. Eine Steuerung der Regeneration des Partikelfilters kann entweder passiv oder aktiv erfolgen. Eine hohe Partikelbeladung des Filters führt zu einem unzulässig starken Anstieg des Abgasgegendrucks.

In einfachen, aktiv betriebenen Verfahren wird üblicherweise eine zurückgelegte Fahrstrecke oder eine Betriebsdauer der Brennkraftmaschine für die Durchführung der Regeneration des Filters in festen Intervallen zugrunde gelegt. Dies geschieht typischerweise alle 250 bis 1000 km. Bei Rußpartikelfiltern geschieht die Regeneration durch eine Erhöhung der Abgastemperatur auf typischerweise 550°C bis 650°C. Dies kann durch Maßnahmen in der Gemischaufbereitung des Motors oder durch nachmotorische Maßnahmen erfolgen. Es wird dabei eine exotherme Reaktion angestoßen, die einen Abbrand der Rußpartikel bewirkt und innerhalb einiger Minuten (z.B. 20 Minuten) den Partikelfilter regeneriert.

So ist beispielsweise aus der EP 1130227 A1 ein System zur Unterstützung der Regeneration eines in einem Abgasbereich einer Brennkraftmaschine angeordneten Partikelfilters bekannt geworden, bei welchem die Abgastemperatur zum Starten und Aufrechterhalten der Partikel-Regeneration durch Einbringung von Kohlenwasserstoffen (HC) in den Abgasbereich erhöht wird. Die Erhöhung der Abgastemperatur erfolgt im Wesentlichen durch wenigstens eine Kraftstoff-Nacheinspritzung in die Brennkraftmaschine, die zu einem erhöhten HC-Anteil im Abgas führt, der in einem Oxidationskatalysator, welcher in Strömungsrichtung des Abgases vor dem Partikelfilter angeordnet ist, exotherm reagiert.

In der DE 102004031321 A1 sowie in der DE 102006009921 A1 werden ein Verfahren zum Dosieren eines Kraftstoffs in einen Abgaskanal einer Brennkraftmaschine und eine Vorrichtung zur Durchführung des Verfahrens vorgeschlagen.

Ein derartiges System, bei dem temporär eine genau dosierte Kraftstoffmenge zur Regeneration des Partikelfilters in den Abgasstrang eingespritzt wird, ist auch unter dem Namen DEPARTRONIC der Anmelderin bekannt und ist insbesondere für den Einsatz in Nutzfahrzeugen mit Dieselmotoren vorgesehen. Die HC-Zumessung wird aus einer Periodendauer und einem Tastverhältnis zur Ansteuerung eines Abschaltventils und eines Dosierventils innerhalb einer Kraftstoffzumesseinrichtung bestimmt, um einen gewünschten HC-Massenstrom in das Abgassystem zu dosieren, wobei die berechneten Werte an die entsprechenden Gerätetreiber des Abschaltventils und des Dosierventils gesendet werden.

Als unter Umständen problematisch hat sich dabei herausgestellt, dass die Komponenten der HC-Zumesseinrichtung kein autarkes System bilden. Die Funktion ist vielmehr beispielsweise von den Druck-Verhältnissen im Niederdruckkreislauf des Kraftstoffes vor dem Abschaltventil bzw. vor dem Dosierventil abhängig. Zudem kann beispielsweise bei niedriger Versorgungsspannung und erhöhter Spulentemperatur des Dosierventils die Magnetkraft nicht mehr ausreichen, um das Ventil gegen höhere Differenzdrücke zu öffnen. Eine rudimentäre Diagnosesoftware würde in diesem Fall ein defektes Dosierventil melden, obwohl es technisch intakt ist. Fehlende oder zu niedrige Wärmeabfuhr, z.B. infolge fehlenden Kraftstoffes oder erhöhter Kraftstofftemperatur, kann zudem zu einer Überhitzung der Magnetspule führen, wodurch im Extremfall die Spule zerstört werden kann.

Es ist daher Aufgabe der Erfindung, ein Verfahren zu etablieren, mit dem ein maximal möglicher Schaltdruck bei dem Dosierventil bestimmt werden kann, um ein sicheres Schalten des Dosierventils zu gewährleisten, und welches die zuvor genannten Einflüsse mit einbezieht. Es ist weiterhin Aufgabe der Erfindung, eine entsprechende Vorrichtung bereitzustellen.

### Offenbarung der Erfindung

### Vorteile der Erfindung

Die das Verfahren betreffende Aufgabe wird dadurch gelöst, dass ein maximal schaltbarer Druck am Dosierventil aus einer aktuell anliegenden Versorgungsspannung und einer Spulentemperatur einer Magnetspule des Dosierventils bestimmt, mit einem über das Dosierventil anstehenden Differenzdruck verglichen und das Dosierventil abhängig vom Ergebnis des Vergleichs angesteuert wird. Mit dem Verfahren kann ein Überschreiten des Differenzdruckes über den maximal schaltbaren Druck detektiert werden. Eine falsche Systemreaktion, ein unerwünschter Fehlereintrag, wie beispielsweise zuvor beschrieben, oder eine Ventilbeschädigung aufgrund äußerer Rahmenbedingungen, wie beispielsweise ein schwankender Kraftstoffversorgungsdruck oder eine überhöhte Kraftstofftemperatur, können dadurch vermieden werden. Insbesondere kann vermieden werden, dass die Magnetspule angesteuert wird, während die Wärmeabfuhr durch den Kraftstoff fehlt. Eine Überhitzung, welche zu weiterem Magnetkraftverlust führen würde, kann dadurch vermieden werden.

Es ist weiterhin vorgesehen, dass das Dosierventil nur dann geöffnet wird, wenn der maximal schaltbare Druck größer ist als der anstehende Differenzdruck. Damit kann eine sichere Dosierung von Kraftstoff unter Vermeidung der zuvor beschriebenen Problemfälle gewährleistet werden.

Um eine Temperaturerhöhung der Magnetspule während der Kraftstoffzudosierung prognostizieren zu können, ist vorgesehen, dass eine Verlustleistung der Magnetspule des Dosierventils aus einem Strom, der durch die Magnetspule fließt, und aus einem Tastverhältnis bestimmt wird. Eine Wärmeabfuhr an der Magnetspule des Dosierventils wird durch die Kraftstofftemperatur bestimmt. Aus der Verlustleistung der Magnetspule und der Wärmeabfuhr lassen sich die Temperatur sowie eine Temperaturveränderungsrate ableiten, mit der auch dynamische Effekte berücksichtigt werden können.

Werden die Abhängigkeiten zur Verlustleistung der Magnetfeldspule und zur Wärmeabfuhr in einem Kennfeld gespeichert, kann relativ einfach der maximal schaltbare Druck bestimmt werden. Zudem können Modifikationen, z.B. infolge eines Austauschs von Komponenten oder durch eine nachträgliche Optimierung der Parameter durch Einspeichern neuer Datensätze leicht nachgepflegt werden. Ebenso können auf diese Weise komplexe funktionale Zusammenhänge, z.B. bei der Bestimmung der Wärmeabfuhrbedingungen, einfach programmiert werden.

Eine Verfahrensvariante sieht dabei vor, dass der maximal schaltbare Druck bei gleich bleibender Versorgungsspannung mit steigendem Tastverhältnis gesenkt wird. Damit kann mit steigendem Tastverhältnis die Zunahme der Verlustleistung berücksichtigt werden, welche bei an sich konstanten Bedingungen - ohne diese Maßnahme - eine Temperaturerhöhung und damit ein Nachlassen der Schaltfähigkeit des Dosierventils zur Folge hätte

In einer anderen Verfahrensvariante ist vorgesehen, dass bei gleich bleibendem Tastverhältnis der maximal schaltbare Druck mit sinkender Versorgungsspannung gesenkt wird. Auch hiermit kann eine effektive und sichere Dosierung der zuvor bestimmten Kraftstoffmenge erreicht werden. Beide zuvor beschriebenen Varianten sind auch in Kombination möglich bzw. können mit anderen Maßnahmen kombiniert werden.

In einer Verfahrensvariante ist vorgesehen, dass der Differenzdruck mittels Drucksensoren bestimmt wird, die vorzugsweise eingangs- und ausgangsseitig am Dosierventil angeordnet sind. Vorteilhaft im Hinblick auf eine Reduzierung des konstruktiven Aufwandes ist es, wenn die Kraftstofftemperatur mittels eines kombinierten Druck-/Temperatursensors eingangsseitig oder ausgangsseitig am Dosierventil bestimmt wird.

Eine bevorzugte Anwendung des Verfahrens, wie es zuvor beschrieben wurde, sieht den Einsatz in einer Kraftstoff-Dosiereinrichtung zur Regeneration, zur Temperaturbeaufschlagung und/ oder zum Thermomanagement eines einem Abgassystem zugeordneten Bauteils einer Brennkraftmaschine von Kraftfahrzeugen vor, die mit Diesel-Kraftstoff betrieben werden. Insbesondere im Nutzfahrzeugbereich kann damit beispielsweise eine effektive und flexible Regeneration des Partikelfilters gewährleistet bzw. unterstützt werden.

Die die Vorrichtung betreffende Aufgabe wird dadurch gelöst, dass in einem Steuergerät als Teil einer übergeordneten Motorsteuerung ein maximal schaltbarer Druck am Dosierventil aus einer aktuell anliegenden Versorgungsspannung und einer Spulentemperatur einer Magnetspule des Dosierventils bestimmbar, mit einem über das Dosierventil anstehenden Differenzdruck vergleichbar und das Dosierventil abhängig vom Ergebnis des Vergleichs ansteuerbar ist. Die Funktion kann dabei als Software-Modul in der übergeordneten Motorsteuerung implementiert sein.

### Kurze Beschreibung der Zeichnungen

Die Erfindung wird im Folgenden anhand eines in den Figuren dargestellten Ausführungsbeispiels näher erläutert. Es zeigen:
Figur 1 eine Kraftstoff-Dosiereinrichtung einer Brennkraftmaschine in einer schematischen Darstellung.
Figur 2 eine schematische Darstellung des erfindungsgemäßen Verfahrens und
Figur 3 einen Verlauf eines maximal schaltbaren Druckes in Abhängigkeit eines Tastverhältnisses und einer Versorgungsspannung des Dosierventils.

### Ausführungsformen der Erfindung

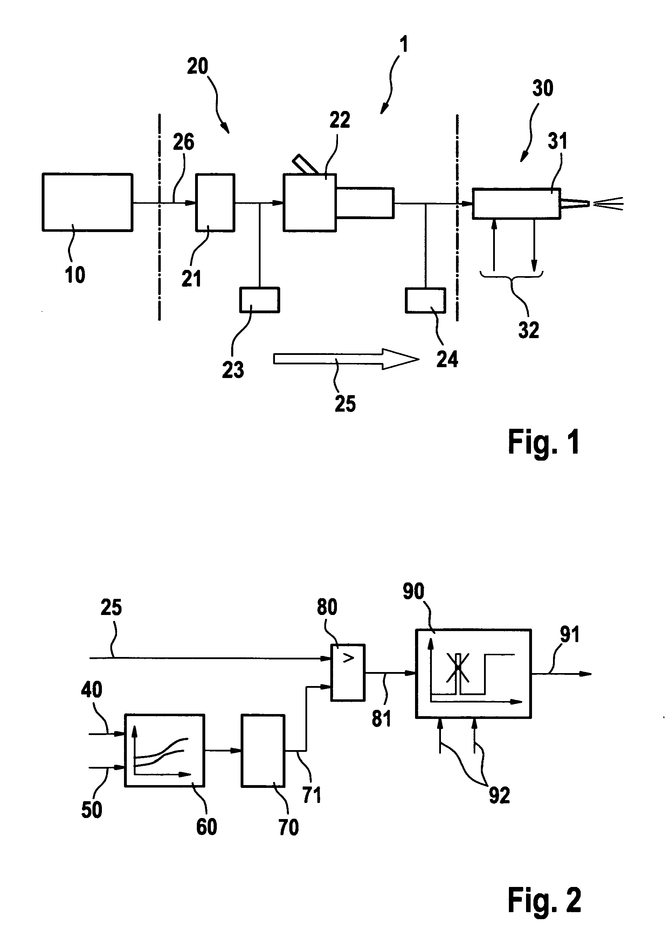

Figur 1 zeigt schematisch eine Kraftstoff-Dosiereinrichtung 1 zur Regeneration eines Partikelfilters im Abgasstrang einer Brennkraftmaschine, welche mit Diesel-Kraftstoff betrieben werden kann. Als Hauptkomponenten weist die Kraftstoff-Dosiereinrichtung 1 einen Niederdruckkreislauf 10 für den Kraftstoff, eine Kraftstoffzumesseinrichtung 20 und eine Einspritzeinheit 30 auf, die den Kraftstoff in den Abgasstrang der Brennkraftmaschine in Strömungsrichtung des Abgases vor dem Partikelfilter einspritzt.

Vom Niederdruckkreislauf 10 erfolgt ein Kraftstofffluss 26 in Richtung der Kraftstoffzumesseinrichtung 20, die ein Abschaltventil 21 (Shut off Valve SV) sowie ein Dosierventil 22 (Dosing Valve DV) aufweist. Eine Zumessung von Kohlenwasserstoffen (HC) erfolgt durch eine zeitliche Ansteuerung des Abschaltventils 21 und des Dosierventils 22, wobei der gewünschte HC-Massenstrom im Wesentlichen aus der Periodendauer und einem Tastverhältnis zur Ansteuerung des Abschaltventils 21 und des Dosierventils 22 bestimmt wird. Die berechneten Werte werden an den Komponententreiber für das Abschaltventil 21 und das Dosierventil 22 gesendet.

Ein anliegender Differenzdruck 25 über dem Dosierventil 22 wird im gezeigten Ausführungsbeispiel mittels Drucksensoren 23, 24 bestimmt, die eingangs- und ausgangsseitig am Dosierventil 22 angeordnet sind. Zur Temperaturbestimmung des Kraftstoffes kann der eingangsseitige Drucksensor als kombinierter Druck-/Temperatursensor 23 ausgelegt sein. Ebenso möglich ist die Temperaturbestimmung ausgangsseitig am Dosierventil 22, z.B. in der Position des Drucksensors 24.

Die Einspritzeinheit 30 am Abgasstrang der Brennkraftmaschine besteht im Wesentlichen aus einem Injektionsventil 31, welches einen Kühlwasserzulauf/-ablauf 32 zur Kühlung des Injektionsventils 31 aufweist.

Figur 2 zeigt schematisch den Prozessablauf des erfindungsgemäßen Verfahrens anhand eines Blockschaltbildes.

Erfindungsgemäß ist vorgesehen, dass ein maximal schaltbarer Druck 71 am Dosierventil 22 aus einer aktuell anliegenden Versorgungsspannung 40 und einer Spulentemperatur 50 der Magnetspule des Dosierventils 22 aus Figur 1 bestimmt, mit einem über das Dosierventil 22 anstehenden Differenzdruck 25, welcher mittels der Drucksensoren 23, 24 (siehe Figur 1) bestimmbar ist, verglichen und das Dosierventil abhängig vom Ergebnis des Vergleichs angesteuert wird.

Dazu ist vorgesehen, dass in einer Kennfeldeinheit 60 aus der Versorgungsspannung 40 und der Spulentemperatur 50 eine Vorgabe für einen maximal schaltbaren Druck 71, welcher ausgangsseitig einer der Kennfeldeinheit 60 nachgeschalteten Umrechnungseinheit 70, zur Verfügung steht, berechnet wird. Dabei ist im gezeigten Ausführungsbeispiel vorgesehen, dass eine Verlustleistung der Magnetspule des Dosierventils 22 aus einem Strom, der durch die Magnetspule fließt, und aus einem Tastverhältnis 100 bestimmt wird. Weiterhin wird eine Wärmeabfuhr an der Magnetspule des Dosierventils 22 durch die Kraftstofftemperatur bestimmt. Diese Berechnung kann ebenfalls in der Kennfeldeinheit 60 unter Berücksichtigung der Eingangskenngrößen Strom, Tastverhältnis und Kraftstofftemperatur, welche beispielsweise mittels dem kombinierten Druck-/Temperatursensor 23 bestimmbar ist, durchgeführt werden.

In einer der Umrechnungseinheit 70 nachgeschalteten Komparator-Einheit 80 wird der berechnete maximal schaltbare Druck 71 mit dem über dem Dosierventil 22 anstehenden Differenzdruck 25 verglichen. Als Ausgangssignal 81 der Komparator-Einheit 80 wird ein entsprechender Wert generiert, welcher bewirkt, dass das Dosierventil 22 nur dann geöffnet wird, wenn der maximal schaltbare Druck 71 größer ist als der anstehende Differenzdruck 25. Zuvor wird das Ausgangssignal 81 in einer der Komparator-Einheit 80 nachgeschalteten Ansteuereinheit 90 zeitlich entprellt, so dass als Ausgangssignal 91 der Ansteuereinheit 90 ein zeitliches Steuersignal für das Dosierventil 22 zur Verfügung steht, welches kurzzeitige Druckschwankungen, z.B. im Niederdruckkreislauf 10 für den Kraftstoff, ignoriert. Zusätzlich kann vorgesehen sein, dass mittels einem oder mehrerer Trigger-Eingänge 92 das Ausgangssignal 91 der Ansteuereinheit 90 zusätzlich beeinflusst wird. Als Signale für die Trigger-Eingänge 92 können beispielsweise Taktsignale genutzt werden, mit denen eine gepulste Kraftstoffeinspritzung in den Abgasstrang der Brennkraftmaschine realisiert werden kann.

Die zuvor beschriebene Funktionalität des Verfahrens kann als Hard- und/ oder Software ausgeführt und zumindest teilweise Bestandteil einer übergeordneten Motorsteuerung sein.

Um eine sicheres Schaltverhalten des Dosierventils 22 zu gewährleisten, ist beispielsweise vorgesehen, dass der maximal schaltbare Druck 71 bei gleich bleibender Versorgungsspannung 40 mit steigendem Tastverhältnis 100 gesenkt wird. Zusätzlich kann auch bei gleich bleibendem Tastverhältnis 100 der maximal schaltbare Druck 71 mit sinkender Versorgungsspannung 40 gesenkt werden. Beide Strategien können kombiniert oder auch jeweils separiert durchgeführt werden. Die Parameter für die funktionellen Zusammenhänge sind vorzugsweise in der Kennfeldeinheit 60 hinterlegt.

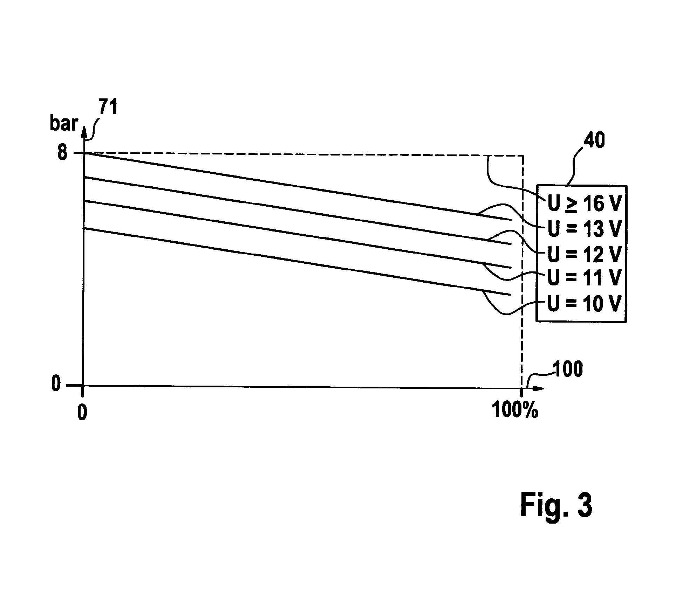

Figur 3 zeigt als Beispiel den Verlauf des maximal schaltbaren Druckes 71 des Dosierventils 22 in Abhängigkeit des Tastverhältnisses 100 und der Versorgungsspannung 40.

Im gezeigten Beispiel, bei einer Kraftstofftemperatur von max. 90° C, beträgt der maximal schaltbare Druck 71 bei einer Versorgungsspannung 40 von ≥ 16 V bis zu 8 bar und kann bis zu einem Tastverhältnis von 95 % bei einer Einspritztaktung von 10 Hz aufrechterhalten werden. Bei einer niedrigeren Versorgungsspannung 40, z.B. gleich oder kleiner 13 V, sinkt der maximal schaltbare Druck 71 mit zunehmendem Tastverhältnis 100 nahezu linear ab, wobei der Ausgangswert für den maximal schaltbaren Druck 71 bei kleinem Tastverhältnis 100 mit abnehmender Versorgungsspannung 40 entsprechend geringer angesetzt wird.

Bei beispielsweise nur 10 V Versorgungsspannung 40 beträgt der maximal schaltbare Druck 71 bei kleinem Tastverhältnis 100 (< 5 %) lediglich 4,5 bis 5 bar und sinkt mit zunehmenden Tastverhältnis bis 95 % auf einen Wert von etwa 3 bar. Bei einer Versorgungsspannung 40 von 13 V sinkt der maximal schaltbare Druck 71 von knapp 8 bar bei einem Tastverhältnis von < 5 % auf einen Wert von 5,5 bar bei einem Tastverhältnis 100 von 95 %.

Ohne im Weiteren darauf einzugehen, kann der Verlauf des maximal schaltbaren Drucks 71 auch in Abhängigkeit anderer Größen, wie der Kraftstofftemperatur oder der Stromstärke durch die Magnetspule, vorgegeben werden.

## Patentansprüche

1. Verfahren zur Schaltdruckberechnung bei einem Dosierventil (22) einer Kraftstoff-Dosiereinrichtung (1) zur Zudosierung von Kraftstoff in einen Abgasstrang einer Brennkraftmaschine mit einem zur Regeneration, zur Temperaturbeaufschlagung und/ oder zum Thermomanagement eines einem Abgassystem zugeordneten Bauteils der Brennkraftmaschine, wobei der Kraftstoff in Strömungsrichtung des Abgases vor dieses Bauteil injiziert wird, **dadurch gekennzeichnet, dass** ein maximal schaltbarer Druck (71) am Dosierventil (22) aus einer aktuell anliegenden Versorgungsspannung (40) und einer Spulentemperatur (50) einer Magnetspule des Dosierventils (22) bestimmt, mit einem über das Dosierventil (22) anstehenden Differenzdruck (25) verglichen und das Dosierventil abhängig vom Ergebnis des Vergleichs angesteuert wird.

2. Verfahren nach Anspruch 1, **dadurch gekennzeichnet, dass** das Dosierventil (22) nur dann geöffnet wird, wenn der maximal schaltbare Druck (71) größer ist als der anstehende Differenzdruck (25).

3. Verfahren nach Anspruch 1 oder 2, **dadurch gekennzeichnet, dass** eine Verlustleistung der Magnetspule des Dosierventils (22) aus einem Strom, der durch die Magnetspule fließt, und aus einem Tastverhältnis (100) bestimmt wird.

4. Verfahren nach Anspruch 1 oder 2, **dadurch gekennzeichnet, dass** eine Wärmeabfuhr an der Magnetspule des Dosierventils (22) durch die Kraftstofftemperatur bestimmt wird.

5. Verfahren nach einem der Ansprüche 1 bis 4, **dadurch gekennzeichnet, dass** die Abhängigkeiten zur Verlustleistung der Magnetfeldspule und zur Wärmeabfuhr in einem Kennfeld gespeichert werden.

6. Verfahren nach einem der Ansprüche 1 bis 5, **dadurch gekennzeichnet, dass** der maximal schaltbare Druck (71) bei gleich bleibender Versorgungsspannung (40) mit steigendem Tastverhältnis (100) gesenkt wird.

7. Verfahren nach einem der Ansprüche 1 bis 5, **dadurch gekennzeichnet, dass** bei gleich bleibendem Tastverhältnis (100) der maximal schaltbare Druck (71) mit sinkender Versorgungsspannung (40) gesenkt wird.

8. Verfahren nach einem der Ansprüche 1 bis 7, **dadurch gekennzeichnet, dass** der Differenzdruck (25) mittels Drucksensoren (23, 24) bestimmt wird.

9. Verfahren nach einem der Ansprüche 1 bis 8, **dadurch gekennzeichnet, dass** die Kraftstofftemperatur mittels eines kombinierten Druck-/Temperatursensors (23) eingangsseitig oder ausgangsseitig am Dosierventil (22) bestimmt wird.

10. Anwendung des Verfahrens nach einem der Ansprüche 1 bis 9 in einer Kraftstoff-Dosiercinrichtung (1) zur Regeneration, zur Temperaturbeaufschlagung und/ oder zum Thermomanagement eines einem Abgassystem zugeordneten Bauteils einer Brennkraftmaschine von Kraftfahrzeugen, die mit Diesel-Kraftstoff betrieben werden.

11. Vorrichtung zur Schaltdruckberechnung bei einem Dosierventil (22) einer Kraftstoff-Dosiereinrichtung (1) zur Zudosierung von Kraftstoff in einen Abgasstrang einer Brennkraftmaschine mit einem zur Regeneration, zur Temperaturbeaufschlagung und/ oder zum Thermomanagement eines einem Abgassystem zugeordneten Bauteils der Brennkraftmaschine, **dadurch gekennzeichnet, dass** in einem Steuergerät als Teil einer übergeordneten Motorsteuerung ein maximal schaltbarer Druck (71) am Dosierventil (22) aus einer aktuell anliegenden Versorgungsspannung (40) und einer Spulentemperatur (50) einer Magnetspule des Dosierventils (22) bestimmbar, mit einem über das Dosierventil (22) anstehenden Differenzdruck (25) vergleichbar und das Dosierventil (22) abhängig vom Ergebnis des Vergleichs ansteuerbar ist.

## Claims

1. Method for calculating the switching pressure in a metering valve (22) of a fuel metering device (1) for metering the fuel into an exhaust train of an internal combustion engine having a for performing regeneration, temperature loading and/or thermomanagement of an internal combustion engine component which is assigned to an exhaust system, wherein the fuel is injected upstream of this component in the direction of flow of the exhaust gas, **characterized in that** a maximum switchable pressure (71) at the metering valve (22) is determined from a currently applied supply voltage (40) and a coil temperature (50) of a solenoid of the metering valve (22), compared with a differential pressure (25) which is present across the metering valve (22) and the metering valve is actuated as a function of the result of the comparison.

2. Method according to Claim 1, **characterized in that** the metering valve (22) is opened only if the maximum switchable pressure (71) is greater than the differential pressure (25) which is present.

3. Method according to Claim 1 or 2, **characterized in that** a power loss of the solenoid of the metering valve (22) is determined from a current which flows through the solenoid and from a pulse duty factor (100).

4. Method according to Claim 1 or 2, **characterized in that** conduction by way of heat at the solenoid of the metering valve (22) is determined by the fuel temperature.

5. Method according to one of Claims 1 to 4, **characterized in that** the dependence with respect to the power loss of the magnetic field coil and that with respect to the conduction by way of heat are stored in a characteristic diagram.

6. Method according to one of Claims 1 to 5, **characterized in that** the maximum switchable pressure (71) is reduced with a constant supply voltage (40) and a rising pulse duty factor (100).

7. Method according to one of Claims 1 to 5, **characterized in that** the maximum switchable pressure (71) is reduced with a decreasing supply voltage (40) and a constant pulse duty factor (100).

8. Method according to one of Claims 1 to 7, **characterized in that** the differential pressure (25) is determined by means of pressure sensors (23, 24).

9. Method according to one of Claims 1 to 8, **characterized in that** the fuel temperature is determined by means of a combined pressure/temperature sensor (23) on the input side or at the metering valve (22) on the output side.

10. Application of a method according to one of Claims 1 to 9 in a fuel metering device (1) for performing regeneration, temperature loading and/or thermomanagement of a component, assigned to an exhaust system, of an internal combustion engine of motor vehicles which are operated with diesel fuel.

11. Device for calculating the switching pressure in a metering valve (22) of a fuel metering device (1) for metering fuel into an exhaust train of an internal combustion engine having a for performing regeneration, temperature loading and/or thermomanagement of an internal combustion engine component which is assigned to an exhaust system, **characterized in that** a maximum switchable pressure (71) at the metering valve (22) can be determined in a control device as part of a superordinate engine controller, from a currently applied supply voltage (40) and a coil temperature (50) of a solenoid of the metering valve (22), and can be compared with a differential pressure (25) which is present across the metering valve (22), and the metering valve (22) can be actuated as a function of the result of the comparison.

## Revendications

1. Procédé de calcul de la pression de commutation d'une soupape de dosage (22) d'un dispositif de dosage de carburant (1) avec un pour le dosage de carburant dans un parcours des gaz d'échappement d'un moteur à combustion interne pour la régénération, la sollicitation en température et/ou la gestion thermique d'un composant du moteur à combustion interne associé à un système de gaz d'échappement, le carburant étant injecté dans la direction d'écoulement du gaz d'échappement avant ce composant, **caractérisé en ce qu'**une pression de commutation maximale (71) au niveau de la soupape de dosage (22) est déterminée à partir d'une tension d'alimentation appliquée actuellement (40) et d'une température de bobine (50) d'une bobine magnétique de la soupape de dosage (22), est comparée avec une pression différentielle (25) existant de part et d'autre de la soupape de dosage (22) et la soupape de dosage est commandée en fonction du résultat de la comparaison.

2. Procédé selon la revendication 1, **caractérisé en ce que** la soupape de dosage (22) n'est ouverte que si la pression de commutation maximale (71) est supérieure à la pression différentielle existant (25).

3. Procédé selon la revendication 1 ou 2, **caractérisé en ce qu'**une puissance de perte de la bobine magnétique de la soupape de dosage (22) est déterminée à partir d'un courant qui passe à travers la bobine magnétique, et d'un rapport cyclique (100).

4. Procédé selon la revendication 1 ou 2, **caractérisé en ce qu'**une évacuation de chaleur au niveau de la bobine magnétique de la soupape de dosage (22) est déterminée par la température du carburant.

5. Procédé selon l'une quelconque des revendications 1 à 4, **caractérisé en ce que** les dépendances par rapport à la puissance de perte de la bobine de champ magnétique et par rapport à la dissipation de chaleur sont stockées dans un champ caractéristique.

6. Procédé selon l'une quelconque des revendications 1 à 5, **caractérisé en ce que** la pression de commutation maximale (71) est abaissée pour une tension d'alimentation constante (40) avec un rapport cyclique croissant (100).

7. Procédé selon l'une quelconque des revendications 1 à 5, **caractérisé en ce que** pour un rapport cyclique constant (100), la pression de commutation maximale (71) est abaissée avec la réduction de la tension d'alimentation (40).

8. Procédé selon l'une quelconque des revendications 1 à 7, **caractérisé en ce que** la pression différentielle (25) est déterminée au moyen de capteurs de pression (23, 24).

9. Procédé selon l'une quelconque des revendications 1 à 8, **caractérisé en ce que** la température du carburant est déterminée au moyen d'un capteur combiné de pression et de température (23) du côté de l'entrée ou de la sortie de la soupape de dosage (22).

10. Utilisation du procédé selon l'une quelconque des revendications 1 à 9 dans un dispositif de dosage de carburant (1) pour la régénération, la sollicitation en température et/ou la gestion thermique d'un composant d'un moteur à combustion interne associé à un système de gaz d'échappement de véhicules automobiles qui fonctionnent avec du carburant diesel.

11. Dispositif de calcul de la pression de commutation d'une soupape de dosage (22) d'un dispositif de dosage de carburant (1) avec un pour le dosage de carburant dans un parcours des gaz d'échappement d'un moteur à combustion interne pour la régénération, la sollicitation en température et/ou la gestion thermique d'un composant du moteur à combustion interne associé à un système de gaz d'échappement, **caractérisé en ce que** dans un appareil de commande en tant que partie d'une commande de moteur subordonnée, une pression de commutation maximale (71) peut être déterminée au niveau de la soupape de dosage (22) à partir d'une tension d'alimentation appliquée actuellement (40) et d'une température de bobine (50) d'une bobine magnétique de la soupape de dosage (22), peut être comparée avec une pression différentielle (25) existant de part et d'autre de la soupape de dosage (22) et la soupape de dosage (22) peut être commandée en fonction du résultat de la comparaison.
